# EUROPEAN PATENT APPLICATION

(11) **EP 1 524 614 A1**
(43) Date of publication of application: **20.04.2005**
(21) Application number: 03023074.2
(22) Date of filing: 14.10.2003
(51) Int. Cl.: G06F 17/60

(54) **Method of electronically managing analytical data in a network having an ERP and a database**

(71) Applicant: Bayer Business Services GmbH, 51368 Leverkusen (DE)
(72) Inventor: Dräger, Matthias, Dr., 51375 Leverkusen (DE); Maldener, Gerd, Dr., 42799 Leichlingen (DE); Spingat, Dirk, Dr., 42555 Velbert-Langenberg (DE); Schmitz, Rainer, 42929 Wermelskirchen (DE)

(57) **Abstract**

The invention relates to a a method of electronically managing measured, calculated or observed data obtained through analytical instrumentation or by observation in a network of two or more systems with at least one ERP system and at least one database.

## Description

### FIELD OF THE INVENTION

The invention relates to a method of electronically managing measured, calculated or observed data obtained through analytical instrumentation or by observation in a network of two or more systems with at least one ERP system and at least one database.

### BACKGROUND OF THE INVENTION

During the development and production of many products, e.g. pharmaceutical and chemical products, it is necessary to perform various tests and evaluations and maintain various records, then to manipulate the results of these tests and evaluations and prepare various reports that interpret and summarize those results. Such activities are generally performed in accordance with a set of laws and guidelines provided by the agency, such as the FDA, which controls or approves the market-release of the products.

To comply with regulatory requirements manufacturers devised Standard Operating Procedures (SOP's), often prepared by the manufacturer's internal Quality Assurance department (QA), or by an independently contracted auditor.

A lot of laboratory staff time is spent on documentation related to these tests, not actual laboratory operations. Cycle times from sample arrival to certificate of analysis are often quoted at 10 to 15 days. The QC/QA review cycle often challenges the data or the analysis, generating investigations to support the conclusions. Out of spec or out of trend results discovered during review are well beyond the time of the operation that generated them. To reduce cycle time in the laboratory, it is imperative to present error free, valid measurements.

Several computer-based data management systems specifically intended for use in such analytical laboratories have been designed over the years and are known generically as Laboratory Information Management Systems (LIMS). LIMS systems and chromatography data systems are common systems in pharmaceutical labs. While these systems often archive the analytical results, and provide reports, they are usually oriented too late in the process to insure original data integrity.

A critical need exists to capture, validate and secure laboratory data as close to the source as possible. Technology needs to be developed which will perform this function with simple equipment and clear interfaces for laboratory personnel and instruments.

US 6,581,020 to Velquest describes a system for managing and reporting laboratory data wherein the data is obtained at remote data-taking stations, transferred instantaneously by wireless communication to a main data-storing/manipulating station for recording therein without being recorded at the remote data-taking stations, and reported only from the data-storing/manipulating.

It is an object of the present invention to provide a method to directly link information available from ERP's, laboratory data management systems and analytical instruments to provide a result that integrates analytical results, supporting data (meta data) and test validity confirmation.

It is an object of the present invention to provide a method in which data maintenance requirements are minimized and simplified.

It is an object of the present invention to provide a method in which the dependence on hand written and paper records is eliminated.

It is a further object of the present invention to provide such a method in which the likelihood of a transcription error is minimized.

It is a further object to provide a method that is more universally adaptable to a variety of laboratory environments.

It is still a further object to provide a method that verifies that operators are qualified to perform tests and access information on a real-time basis.

It is still a further object to provide a method that verifies that results are within desired ranges on a real-time basis to ensure that variations are recognized immediately.

It is a further object to provide a method that verifies that equipment is properly calibrated on a real-time basis to ensure that variations are recognized immediately.

In one embodiment of the invention validated instrument means calibrated and approved instruments.

A unified data acquisition system is provided to simplify the laboratory environment. Since collecting data in agreement with the latest federal regulations (21CFR Part 11) requires that the data sources be identified, that the data be put into a secure repository and that access be restricted to authorized personnel.

Grouped identifiers are not allowed by FDA regulations. Since conventions for user ID's and passwords vary from one company to another, a customer SOP must be prepared to specify user name and password practices. The present invention has settings to allow enforcement of the uniqueness, frequency of change and re-use requirements specified in the SOP. When biometric identification of individuals is used, the system can also ensure that unique individuals are identified.

Terminal "sessions" must be established during which an identified individual is making data entries or controlling the collection of data from instruments. The terminal device may not be left unattended while the session is active. If the operator leaves the terminal device, she/he must close the session to prevent unauthorized entries. It is common to have an automated data collection activity that was started during a valid session continue after the session is closed. Another need is to enable a different individual (either to take over in case the original person is no longer available, or to act with higher authority) to initiate a terminal session and interact with ongoing data collection. The new individual must be properly identified and all data tagged with his identity.

The access control records of the present invention are themselves stored in the database. The system allows for biometric identification of people and creates terminal sessions. Operators are able to log out. A reminder is displayed to attend the terminal at all times until log out. Terminal sessions may be resumed by any authorized person. All data collected is tagged with the operators identity.

The Access Control System includes an enumeration of individuals together with the list of authorized activities and the list of authorized values for various security attributes. The access control system compares the security attributes of both the record and the individual to find a match before access to the record is granted. The system will only accept transactions from authorized individuals. Eligibility is based on user training on specific analytical methods. Access to training records is needed to determine eligibility. Enforcement by the system is an installation configuration switch. Supervisor approval is needed for non-eligible personnel to perform analytical methods.

21CFR Part 11 does not mandate electronic signatures, but without them associated paper documents must be produced, linked and signed. The present system supports a fully "paperless" system. An electronic signature is an integral part of the present system.

An audit trail for each data field is maintained containing the entire data history. All changes are identified with the information including who performed the change (by entering the password or signature) and when was the change performed. A record of the data before the change was performed is kept. The reason for changes to the data are recorded.

Audit trail records must never be changed. They must contain unquestionable ties to the live data. No "rollback" facilities are available. The audit trail will grow over time and must be supported by hardware and software that introduces minimal delays in transaction processing.

Many functions performed by a business can be more effectively managed by using an enterprise resource planning system (ERP) to keep track of data associated with the functions.

One of the most widely spread ERP is a system called SAP, produced by SAP AG, Walldorf, Germany.

ERP's are presently used to keep track of business functions such as finances, taxes, inventory, payroll, planning. Some ERP's additionally allow sharing of data across organizational units, which can greatly improve information flow through a company.

It can easily be imagined that there are many questions at different geographical sites concerning analytical information. It could be an enormous advantage to share these informations via ERP'S already present at the different locations.

Providing such sharing can therefore significantly enhance the effectivity of analytical methods and business processes.

Some ERP's also prvide for quality management (QM) modules. The QM-module within SAP (mySAP™ PLM (Product Lifecycle Management)) is described by SAP AG to realize many LIMS functionalities.

It can be observed that the interaction between the ERP and the analytical instruments in the laboratory can be improved on many occasions.

So far there is no method on the market that unifies the functionality of analytical instruments, laboratory information management systems and ERP's.

It would be desirable to have a lean middleware (instrument server) that would facilitate an information flow from analytical instruments directly into the ERP.

### BRIEF DESCRIPTION OF THE DRAWING

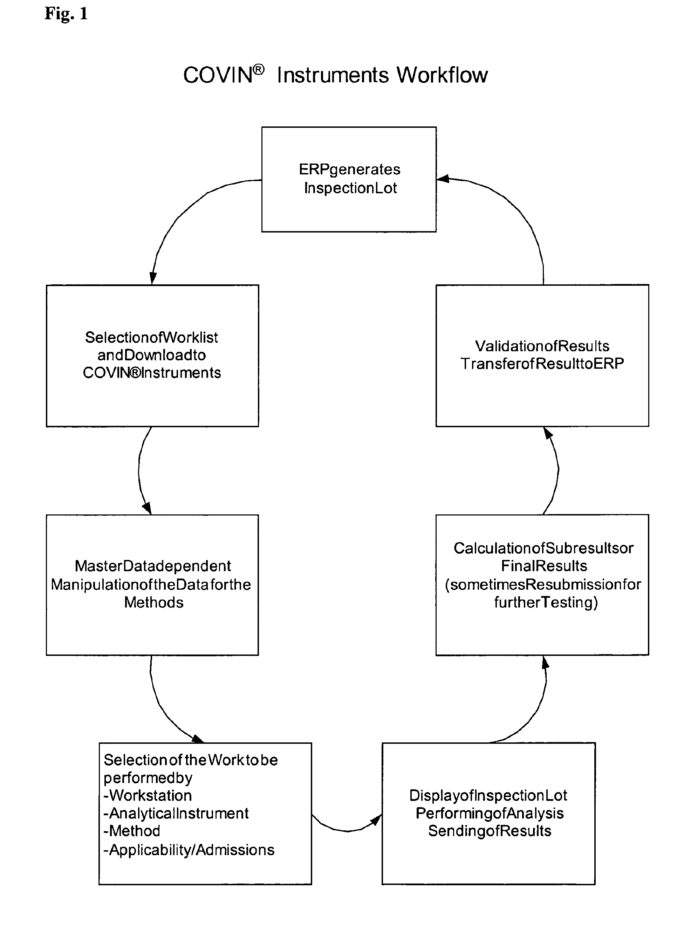

FIG. 1 is a schematic block diagram depicting the components of one preferred embodiment of the method of the invention and the interactions between the components.

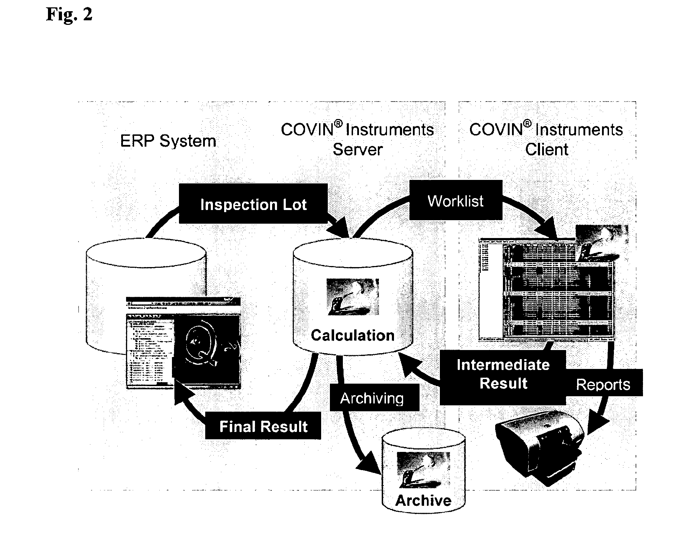

FIG. 2 is another schematic diagram depicting the components of of one preferred embodiment of the method of the invention and the interactions between the components.

### SUMMARY OF THE INVENTION

The invention relates to a method of electronically managing measured, calculated or observed data obtained through analytical instrumentation or by observation by
a) providing a network of two or more systems with at least one ERP system and a first system comprising a database and a first program,
b) loading an array containing a single set or multiple sets of instructions from the ERP system to the first system and creating a structure in the database,
c) providing the structure or a subset of the structure to a second program being able to communicate with at least one analytical instrument or an observer,
d) confirming the calibration status of the analytical instrument, and denying data aquisition without the confirmation of a proper calibration,
e) confirming the validation status of a given analytical instrument for a given analytical method,
f) communicating of the second program with at least one analytical instrument or at least one observer,
g) the second program receiving results from the at least one instrument or the observer and the meta data sent by the instruments or entered by the observer to fill the structure or the subset of the structure,
h) sending the filled structure into the first system containing the database,
i) the first system monitoring the filling of the structure and confirming the completeness of all results required for the calculation of intermediate and end results followed by calculating the intermediate and end results, and
k) communicating the end results to the at least one ERP system:

### DETAILED DESCRIPTION OF THE INVENTION

The artisan will readily understand the meaning of the terms of the art used in this application.

In one embodiment of the invention the following explanations may help to ease the understanding of certain term.

Application Server: A computer system which can access programs and records contained in the records management system, execute those programs and update records in the records management system.

Authentication: The process of checking the privileges of the identified individual who is causing records to be created or updated. This process uses an authentication data base that contains individuals names and unique privilege identification means that are compared to the security attributes of the records being created or updated. Authentication may never be overridden or ignored.

Eligibility: The process of determining the ability of an individual to create and modify records. The eligibility may be due to position, training, experience, delegation, or other reasons. It is most commonly a function of training. Eligibility may be overridden or ignored in some situations.

Records Management System: A data base application which stores collected records and enforces record management disciplines on those records including all therequirements of 21 CFR Part 11. These record management disciplines include the collection of meta-data identifying the sources and individuals responsible for the records, as well as a complete audit trail of all changes to the records.

Terminal Session: A period of time, relative to a particular terminal device, during which a known individual is interacting with that terminal device. A policy that requires personal attendance by that individual to the device as long as the terminal session is active must be enforced. The individual must "log out" or otherwise end the terminal session prior to leaving the device unattended.

There are three identification components: the operator, the equipment and the sample. This system will positively identify each of these.

Array: In one embodinment of the invention an array is a table of information. An array can also contain preexisting analytical methods. In one embodiment the array may contain a number of inspection characteristics related to an analytical method.

Preexisting analytical method: A preexisting analytical method can be an analytical method described in an SOP or a pharmaceutical textbook. It can also be an analytical method otherwise useful in the course of the compilation of information necessary to achieve the desired results.

The current invention provides a method that can build a bridge between the ERP and the analytical instruments. In one preferred embodiment the current invention provides a bridge between a quality management module (QM-module) of the ERP or the ERP's and a variety of analytical instruments. A preferred QM-module is mySAP™ PLM. A preferred bridge between these two groups is a product by Bayer Business Services, Leverkusen called COVIN® Instruments, which uses a database. The preferred database of COVIN® Instruments is ORACLE. In one preferred embodiment of the invention COVIN® Instruments eliminates the need for a further LIMS.

It is a feature of an embodiment of the current invention that the information and functionality of the ERP , preferably mySAP™ PLM, is used, bundeled and integrated into the procedures of the analytical instruments. The inspection lots generated in the ERP are transferred by the instrument server to the analytical instruments. That can happen directly or indirectly. In a preferred embodiment of the invention there is no need for a uninterupted online connection between the ERP and the analytical instruments. This will enhance availability and performance during daily use of the system. In one embodiment of the invention the results that are requested via the subsystem will be enriched with specific method details.

COVIN® Instruments workstation clients will download the workload for the specific workplace or workplaces, will direct the attached analytical instruments, record the singular results automatically from the analytical instruments, while still providing for an additional manual entry of results, meta data and observations.

The COVIN® Instruments database will cause calculation of partial results and/or end results. If quality management necessitates it- e.g. ISO, GLP/ GMP, FDA 21 CFR Part 11 - a validation by an electronic signature (e.g. password and/or biometrics), an audit of all action performed on the system via an audit trail and the two-person-principle are supported before the results are given back to the ERP system or the ERP systems.

In one embodiment the method of the invention is capable of being used in a regulated environment. All relevant quality management measures that are demanded by industry standards are included.

The method of the invention is efficient. It avoids manual input of results, manual transfer of data and manual calculations, wherever possible. It supports authentification and the possibility of an elctronic signature and it can be controlled by bar code readers, which is very useful, for example when entering results.

In one embodiment of the invention the method of the invention is lean. It is an excellent supplement to an ERP-system. The expenditures for setup and maintenance are minimal.

It is an important feature of a preferred embodiment of the present invention that master data can be kept within the ERP and do not have to be kept redundantly. There is no need for synchronisation, which is an apparent benefit in time, money and data safety.

In one embodiment of the invention the instruction comprises at least two worksteps having a predetermined order. Examples include determining the net weight after determining the tara weight.

In one embodiment of the invention the instruction comprises at least two workstep having a predetermined dependency. Examples include the determination of the dry weight after determination of the mass before drying and determination of the weight loss during drying.

In one embodiment of the invention the set of instructions identifies at least one analytical instrument and a method to be performed thereon. Examples include a pH-device, a photometer and a scale.

In one embodiment of the invention each intermediate or end result is calculated immediately after the required part of the structure is filled by the second system.

In one embodiment of the invention each end result is calculated immediately after the required part of the structure is filled by the second system and a required intermediate result was calculated. During the determination of the dry weight, first the mass before drying is determined, followed be the determination of the weight loss during drying, after which the dry weight is calculated and stored as an intermediate result.

In one embodiment of the invention the communication of the end result after data validation is performed by confirming the filling process of the structure or the substructure on the second system by a person different from the operator or observer. An example includes a procedure for authorizing a data transfer from the second system to the first system after an authenticated first user or operator has finalized data aquisition and an authenticated second user having responsibility to finalize the analysis and/or initiate the transfer has acted accordingly on the second system.

### Example

One preferred embodiment of a workflow using the method of the current invention will described below.

An inspection lot was generated in the ERP system SAP by a logistical process. Examples have been performed in case of entry of goods and products into the supply chain, or after production processes. The examples were performed with mySAP™ PLM. From the inspection lot a worklist was selected and downloaded to the COVIN® Instruments Server. Only data relevant to the selected workstations and methods where downloaded. In one example the transfer of the worklist was asynchroneous; there was no standing online connection to the ERP necessary. The data was enhanced by COVIN with features of the analyical methods. Then the aquisition of results on the clients started by authentication of a user (operator). The data aquisition was denied without the confirmation of a proper calibration of the instruments. The selected analytical instruments obtained data on the identified samples and conveyed them to the client. In some examples observations from an operator where also entered into the client. The COVIN server was aquiring the results and calculated intermediate results and/or end results, whenever a data aquisition set was fully available. The results where validated be a second authenticated user (supervisor) and sent to the ERP system. The history of the result was saved together with the results on the ERP.

## Claims

1. A method of electronically managing measured, calculated or observed data obtained through analytical instrumentation or by observation, the method comprising the steps of:
a) providing a network of two or more systems with at least one ERP system and a first system comprising a database and a first program,
b) loading an array containing a single set or multiple sets of instructions from the ERP system to the first system and creating a structure in the database,
c) providing the structure or a subset of the structure to a second program being able to communicate with at least one analytical instrument or an observer,
d) confirming the calibration status of the analytical instrument, and denying data aquisition without the confirmation of a proper calibration,
e) confirming the validation status of a given analytical instrument for a given analytical method,
f) communicating of the second program with at least one analytical instrument or at least one observer,
g) the second program receiving results from the at least one instrument or the observer and the meta data sent by the instruments or entered by the observer to fill the structure or the subset of the structure,
h) sending the filled structure into the first system containing the database,
i) the first system monitoring the filling of the structure and confirming the completeness of all results required for the calculation of intermediate and end results followed by calculating the intermediate and end results, and
k) communicating the end results to the at least one ERP system.

2. The method of claim 1, wherein the network comprises at least one first system, preferably an oracle server, and several ERP sytems.

3. The method of claim 1, wherein the network comprises at least one ERP, preferably SAP, and several first systems.

4. The method of claim 1, wherein the network further comprises means for biometrics or biosensorics.

5. The method of claim 1, wherein the step b) further comprises a step of combining by that first program the array with at least one preexisting analytical method.

6. The method of claim 1, wherein the instruction is at least one workstep.

7. The method of claim 1, wherein the instruction comprises at least two worksteps having a predetermined order.

8. The method of claim 1, wherein the instruction comprises at least two workstep having a predetermined dependency.

9. The method of claim 1, wherein the the set of instructions identifies at least one analytical instrument and a procedure to be performed thereon.

10. The method of claim 1, wherein the second program is situated on a client system.

11. The method of claim 1, wherein the second program is provided by a server to a browser.

12. The method of claim 1, wherein the first and second program are running on the same system, preferably a computer.

13. The method of claim 1, wherein the structure or the subset of the structure is provided to the RAM of the second system.

14. The method of claim 1, wherein the confirmation is performed by the first and second program.

15. The method of claim 1, wherein the validation is performed by the first and the second program.

16. The method of claim 1, wherein the communication between the second program and the instrument or observer is triggered by an operator.

17. The method of claim 16, wherein the communication between the second program and the instrument further comprises sending of parameters from the second system to the anaytical instrument.

18. The method of claim 16, wherein the sending of parameters results in operations of the analytical instrument.

19. The method of claim 1 comprising sending of the filled structure after confirmation by an operator or observer.

20. The method of claim 1, wherein the confirmation is initiated by an electronic signature.

21. The method of claim 20, wherein the electronic signature is done by biometrics.

22. The method of claim 1, wherein each intermediate or end result is calculated immediately after the required part of the stucture is filled by the second system.

23. The method of claim 1, wherein each end result is calculated immediately after the required part of the stucture is filled by the second system and a required intermediate result was calculated.

24. The method of claim 1 comprising communication of the end result after data validation by confirming the filling process of the structure or the substructure on the second system by person diferent from the operator or observer.

25. The method of claim 1, wherein the validation step is initiated by an electronic signature.

26. The method of claim 25, wherein the electronic signature is done by biometrics.

27. A computer having thereon a program enabling the computer to perform a method of electronically managing measured, calculated or observed data obtained through analytical instrumentation or by observation, the method comprising the steps of:
a) providing a network of two or more systems with at least one ERP system and a first system comprising a database and a first program,
b) loading an array containing a single set or multiple sets of instructions from the ERP system to the first system and creating a structure in the database,
c) providing the structure or a subset of the structure to a second program being able to communicate with at least one analytical instrument or an observer,
d) confirming the calibration status of the analytical instrument, and denying data aquisition without the confirmation of a proper calibration,
e) confirming the validation status of a given analytical instrument for a given analytical method,
f) communicating of the second program with at least one analytical instrument or at least one observer,
g) the second program receiving results from the at least one instrument or the observer and the meta data sent by the instruments or entered by the observer to fill the structure or the subset of the structure,
h) sending the filled structure into the first system containing the database,
i) the first system monitoring the filling of the structure and confirming the completeness of all results required for the calculation of intermediate and end results followed by calculating the intermediate and end results, and
k) communicating the end results to the at least one ERP system.

28. A carrier having recorded thereon a program to enable a computer to perform a method of electronically managing measured, calculated or observed data obtained through analytical instrumentation or by observation, the method comprising the steps of:
a) providing a network of two or more systems with at least one ERP system and a first system comprising a database and a first program,
b) loading an array containing a single set or multiple sets of instructions from the ERP system to the first system and creating a structure in the database,
c) providing the structure or a subset of the structure to a second program being able to communicate with at least one analytical instrument or an observer,
d) confirming the calibration status of the analytical instrument, and denying data aquisition without the confirmation of a proper calibration,
e) confirming the validation status of a given analytical instrument for a given analytical method,
f) communicating of the second program with at least one analytical instrument or at least one observer,
g) the second program receiving results from the at least one instrument or the observer and the meta data sent by the instruments or entered by the observer to fill the structure or the subset of the structure,
h) sending the filled structure into the first system containing the database,
i) the first system monitoring the filling of the structure and confirming the completeness of all results required for the calculation of intermediate and end results followed by calculating the intermediate and end results, and
k) communicating the end results to the at least one ERP system.
